# EUROPEAN PATENT APPLICATION

(11) **EP 3 309 474 A1**
(43) Date of publication of application: **18.04.2018**
(21) Application number: 16193696.8
(22) Date of filing: 13.10.2016
(51) Int. Cl.: F25B 37/00, F28F 9/02, F28D 3/02, F28D 5/02

(54) **ARRANGEMENT FOR ABSORPTION REFRIGERATION UNIT AND ABSORPTION REFRIGERATION SYSTEM**

(71) Applicant: Gadlab Engineering Oy, 00620 Helsinki (FI)
(72) Inventor: Mattsson, Jorma Kalevi, 00930 Helsinki (FI); Toikkanen, Anna Karoliina Miranna, 04310 Tuusula (FI); Siljama, Paul Sakari, 00100 Helsinki (FI)
(74) Representative: LEITZINGER OY

(57) **Abstract**

The present invention concerns an arrangement for an absorption refrigeration unit, comprising a floor (109, 209) for collecting process liquid of the absorption refrigeration unit and a pump (304) for circulating said process liquid. At least two orifices are defined in the floor and a receptacle (107, 207) is provided below the orifices for receiving said process liquid through said orifices. The arrangement further comprises a container (106, 206) configured to receive said process liquid from said receptacle through a flow restriction device (110, 210) restricting flow of the process liquid from the container to the receptacle, wherein said pump (304) is configured to receive an input of process liquid from said container (106, 206). The invention also concerns an absorption refrigeration system comprising said arrangement.

## Description

### FIELD OF THE INVENTION

The present invention relates to an arrangement for an absorption refrigeration unit and to an absorption refrigeration system comprising said arrangement.

### BACKGROUND OF THE INVENTION

An absorption refrigeration system uses a heat source, preferably surplus heat, to provide the energy needed to drive a cooling process. Absorption cooling cycle essentially consists of three phases. In evaporation phase a liquid refrigerant evaporates in a low partial pressure environment of an evaporator compartment. In absorption phase the evaporated refrigerant is absorbed by the absorbent liquid in an absorber compartment. In regeneration phase the refrigerant-saturated absorbent liquid is heated which causes the refrigerant to evaporate out. The hot gaseous refrigerant passes through a heat exchanger, transferring its heat outside the system, and condenses.

Marine vessels typically have powerful combustion engines, such as diesel engines or gas turbines which produce surplus heat which can be utilized in the absorption refrigeration system. However, in absorption refrigeration units of the prior art, liquids which run in the refrigeration system are stored and supplied from the bottom of each respective compartment, the evaporator and absorber. These compartments must allow gas to pass between them, but need to separate the liquids in the sumps from each other. A metal plate usually separates the bottom sumps of the two compartments

One of the problems associated with the above arrangement is that the functionality of a conventional absorption refrigeration unit is sensitive to movement. Excessive movement of the unit can be harmful if it causes liquids inside the separate compartments to mix. This can significantly reduce the capacity of the unit. Onboard a seagoing vessel any equipment is prone to movement and vibration, mainly roll and pitch. This causes sloshing of the liquids and the liquids from different compartments are mixed which either lowers the efficiency of the unit or halts cooling until the liquids are separated again. This has almost completely prevented use or absorption refrigeration systems in marine vessels.

### BRIEF DESCRIPTION OF THE INVENTION

An object of the present invention is to provide an arrangement for an absorption refrigeration unit, especially for use in a marine vessel, which can tolerate movement, such as tilting and vibrations without a decrease in efficiency of the absorption refrigeration unit.

The present invention is based on the idea of providing an arrangement for an absorption refrigeration unit. The arrangement provides draining of liquids from the bottom of a compartment into multiple buffer receptacles below a floor of the compartment through multiple orifices in the floor. From the receptacles the liquid flows to a container and flow to opposite direction is blocked.

An advantage of the arrangement of the present invention is that liquid dripping in compartments of the absorption refrigeration unit are quickly drained into multiple buffer receptacles. Sloshing in the receptacle is reduced and mixing of different liquids is prevented. This allows use of the absorption refrigeration system in marine vessels where the system is subject to movement, such as tilting and vibrations, without losses in efficiency or halts in operation.

### BRIEF DESCRIPTION OF THE DRAWINGS

In the following the present invention is described in greater detail by means of preferred embodiments with reference to the accompanying drawings, in which
Figure 1 illustrates a view of an absorber compartment of an absorption refrigeration unit comprising an arrangement according to a first embodiment of the invention,
Figure 2 illustrates a cross-sectional view of an absorption refrigeration unit comprising an arrangement according to the first embodiment of the invention,
Figure 3 illustrates a bottom view into an absorption refrigeration unit comprising an arrangement according to the first embodiment of the invention,
Figures 4a to 4c illustrate a detail of an arrangement according to an embodiment of the invention,
Figure 5 illustrates a side view into an absorption refrigeration unit comprising an arrangement according to a second embodiment of the invention,
Figure 6 illustrates a cross-sectional view of an absorption refrigeration unit comprising an arrangement according to the second embodiment of the invention, and
Figure 7 illustrates a bottom view into an absorption refrigeration unit comprising an arrangement according to the second embodiment of the invention.

### DETAILED DESCRIPTION OF THE INVENTION

Marine vessels typically have powerful combustion engines, such as diesel engines or gas turbines which produce surplus heat which can be utilized in an absorption chilling system having one or more absorption refrigeration units, also known as absorption chiller units. Absorption refrigerator units have two fluid circuits or two liquid circuits, an absorbent circuit and a refrigerant circuit. Numerous absorbent-refrigerant pairs have been found and there is on-going research for finding new absorbent-refrigerant pairs. One commonly used pair is ammonia as refrigerant and water as absorbent. Another commonly used pair is water as refrigerant and lithium bromide as absorbent. Both of these pairs, as well as many other pairs, can be used with the present invention.

The absorption cooling cycle essentially consists of three phases. In evaporation phase a liquid refrigerant evaporates in a low partial pressure environment, thereby extracting heat from its surroundings. The temperature needed for evaporation is low due to the low partial pressure. In absorption phase the evaporated refrigerant is absorbed by the absorbent liquid. In regeneration phase the refrigerant-saturated absorbent liquid is heated which causes the refrigerant to evaporate out. The hot gaseous refrigerant passes through a heat exchanger, transferring its heat outside the system, and condenses. The condensed refrigerant liquid supplies the evaporation phase.

In the absorption cooling cycle, the cooling effect is achieved when refrigerant evaporates in low partial pressure. The surplus heat is used for evaporating the refrigerant from the absorbent. If the refrigerant liquid is accidentally mixed to the absorbent liquid or vice versa, the refrigerant and the absorbent have to be separated by evaporation and cooling effect is not achieved during this time. Therefore it is important to prevent the refrigerant liquid from mixing into the absorbent liquid, and vice versa.

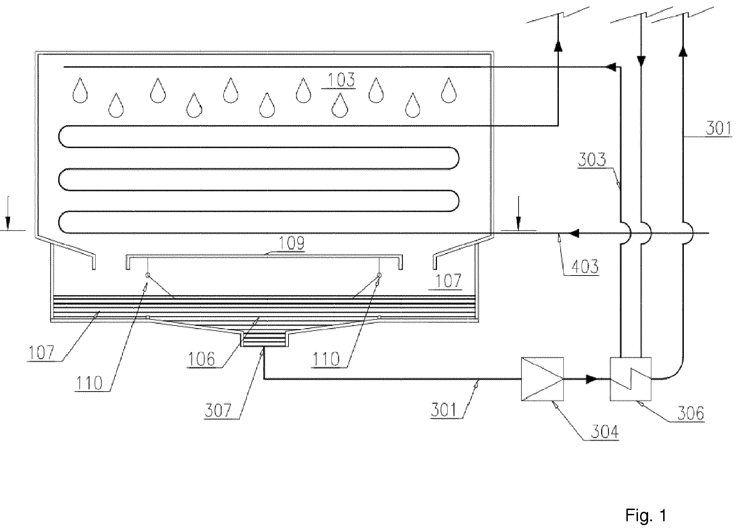

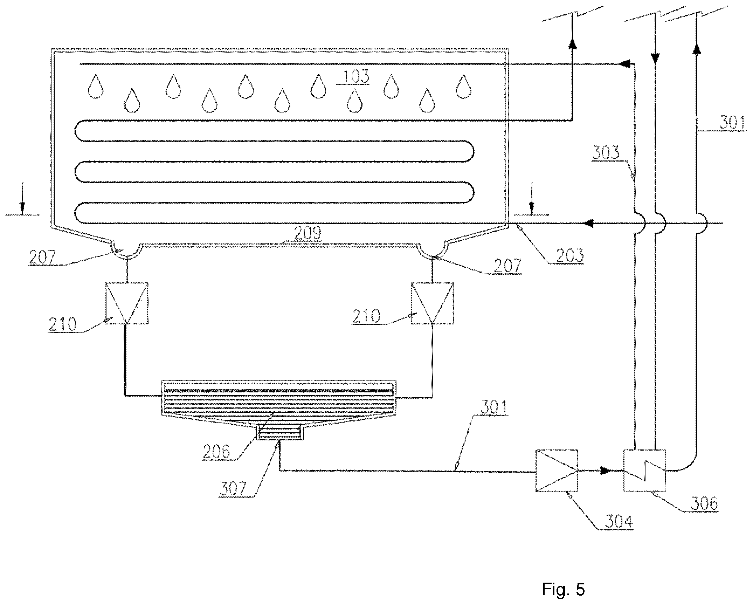

Figures 1 to 3 illustrate a first embodiment of an arrangement according to the present invention and Figures 5 to 7 illustrate a second embodiment of an arrangement according to the present invention. An absorption refrigeration unit has an evaporator compartment 102 and an absorber compartment 103 with a demister 104 provided between said compartments.

A chilled water circuit 402 travels within the evaporator compartment 102 and refrigerant circuit 302 pumps refrigerant with a refrigerant pump 305 into the top part of the evaporator compartment 102. As the refrigerant evaporates in the evaporator compartment 102 due to low pressure, heat is extracted from the chilled water circuit 402 thereby chilling water flowing in the chilled water circuit. A portion of the pumped refrigerant does not evaporate but drips down to the bottom part of the evaporation compartment 102 from where it is collected back to the refrigerant circuit 302 through a refrigerant drain 308.

A cooling water circuit 403 travels within the absorber compartment 103 and absorbent circuit 303 provides absorbent into the top part of the absorber compartment 103. As the absorbent absorbs the refrigerant in the absorber compartment 103 a solution of absorbent and refrigerant, i.e. a process liquid, is formed and it is cooled with a cooling water circuit 403 which condenses the solution and the solution drips down. Drops of the solution fall on the floor 109, 209 which extends between walls of the absorption refrigeration unit, or both or either one of said evaporator and absorber compartments. Preferably a floor 109, 209 is provided at least in the absorber compartment 103.

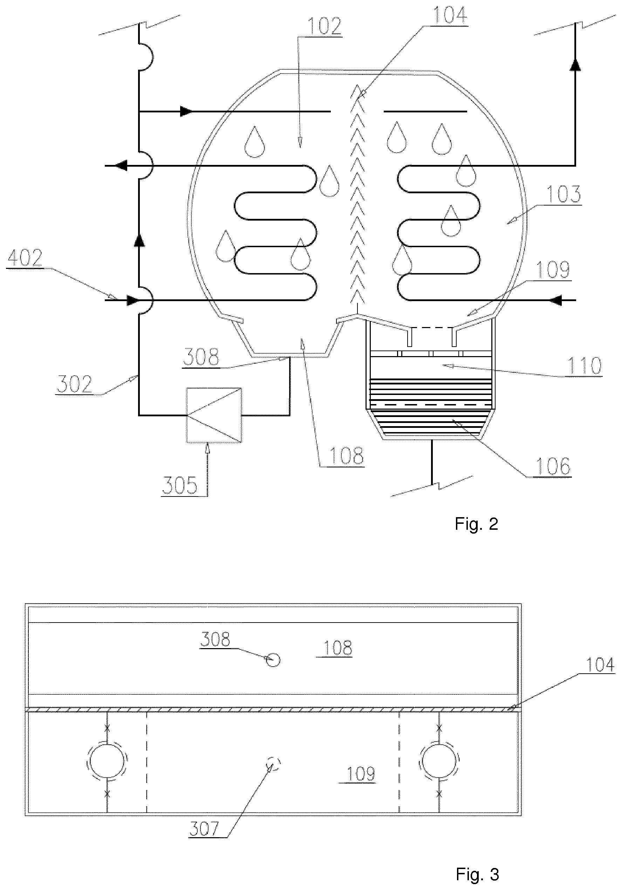

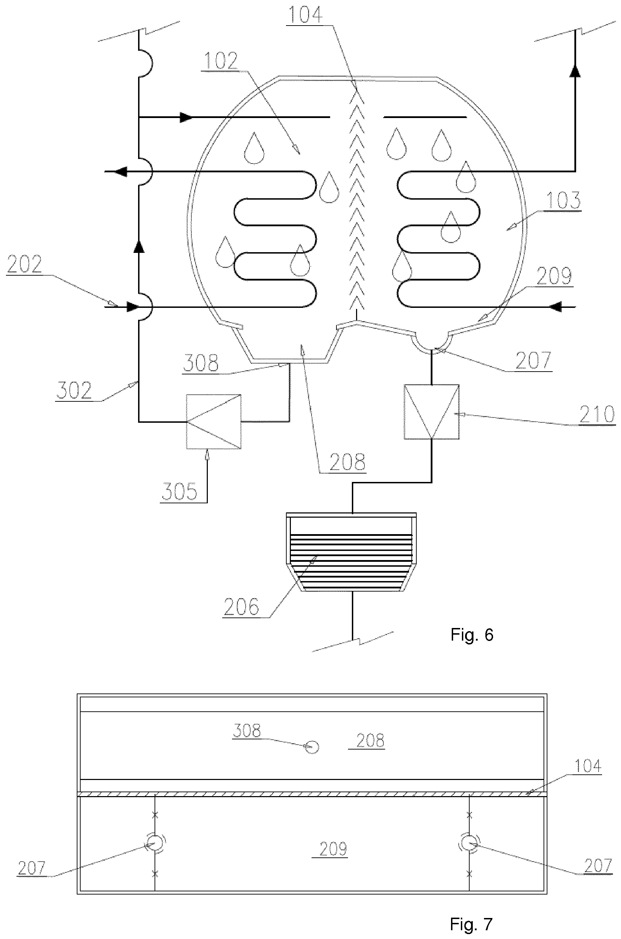

At least two orifices are defined in the floor 109, 209 for draining the solution from the floor through said orifices. Preferably there are two or four or five orifices provided in the floor, for example two orifices as illustrated in Figure 3 and/or Figure 7, or one orifice near each corner of the floor and possibly one additional orifice in the middle of the floor. The floor 109, 209 is preferably at least partially inclined towards said at least two orifices for channelling the solution, i.e. the process liquid, through said orifices by gravity flow. Preferably the at least two orifices are located at lowest part of the floor 109, 209 and the floor level rises towards walls of a compartment or refrigeration unit housing said floor. Inclined floor facilitates draining of the solution to the orifices and through them by gravity flow.

A receptacle 107, 207 is provided below each of said at least two orifices for receiving the solution. As the solution is drained into one of the orifices, the solution drains through the orifice by gravity flow in to the receptacle 107, 207. Preferably said at least two orifices are provided with tubular extensions, including funnel-shaped extensions, extending into said receptacles 107, 207. Said extensions prevent the solution from flowing or leaking back on the floor 109, 209 from the receptacle 107, 207 in case the receptacle is tilted or shaken as it often happens in marine vessels during rough seas. The extension does not render the orifice completely leak proof but it prevents leaking in typical tilting angles of a naval vessel and thereby also the absorption refrigeration unit experience the same tilting angle.

Each of the receptacles 107, 207 comprises a flow restriction device 110, 210 through which the solution may enter a container 106, 206. The flow restriction device restricts flow of the solution from the container back to the receptacle. A pump, namely a solution pump 304, is arranged to pump the solution from the container through a solution drain 308 into a solution circuit 301 which leads to a heat exchanger 306 which separates the absorbent and the refrigerant using surplus heat, preferably from an engine of a marine vessel. The solution pump can be either directly connected to the container 106, 206 or it can be connected by tubing and/or piping to the container 106, 206.

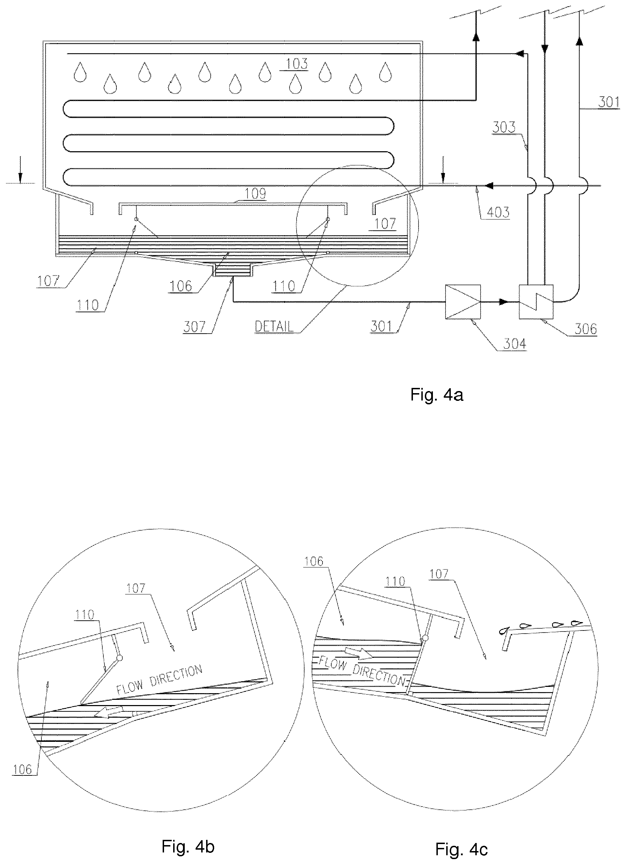

In the first embodiment of the invention as illustrated in Figures 1 to 3, the flow restriction device 110 can be a non-return valve, also known as a one way valve or backflow preventer valve which allows the solution to flow from the receptacle 107 to the container 106 but not from the container to the receptacle. Any suitable non-return valve design can be used, such as a flap valve as illustrated in the figures. A flap valve can be implemented by a hinged or pivoted flap or shutter covering and exposing an orifice on a vertical or at least non horizontal wall. Figure 4 illustrates an example of a flap valve. The operation of the flap valve can be assisted with a spring if needed. Another example could be a tube through a wall between a receptacle and the container, and a ball slightly larger than the inner diameter of the tube on the container side near the end of the tube. In this case solution flowing from the receptacle through the tube pushes the ball away from the tube thus allowing the flow but flow from the container 106 to the receptacle 107 would be prevented by the ball setting at the end of the tube thereby blocking the tube.

In the first embodiment as illustrated in Figures 1 to 3, said receptacles 107 and said container 106 are preferably provided within a housing of the absorption refrigeration unit by dividing a space below said floor 109 with non-horizontal walls, preferably vertical walls, into said receptacles 107 and said container 106. As the intended use of the arrangement is in an absorption refrigeration system installed in a marine vessel, it is important to keep units of the system compact in size, especially the height is an important dimension because height of decks of the marine vessel is a limiting factor. By using the whole surface area of a compartment and placing the receptacles 107 and the container 106 side to side, height of the refrigeration unit does not increase too much.

In the first embodiment, the flow restriction device 110 can be a non-return valve, also known as a one way valve or backflow preventer valve which allows the solution to flow from the receptacle 107 to the container 106 but not from the container to the receptacle. Any suitable non-return valve design can be used, such as a flap valve as illustrated in the figures. A flap valve can be implemented by a hinged or pivoted flap or shutter covering and exposing an orifice on a vertical or at least non horizontal wall between the receptacle and the container. The operation of the flap valve can be assisted with a spring if needed. Another example could be a tube through a wall between a receptacle and the container, and a ball slightly larger than the inner diameter of the tube on the container side near the end of the tube. In this case solution flowing from the receptacle through the tube pushes the ball away from the tube thus allowing the flow but flow from the container 106 to the receptacle 107 would be prevented by the ball setting at the end of the tube thereby blocking the tube.

A marine vessel naturally experiences some tilting, mainly in roll and pitch directions. The tilting of the marine vessel causes the absorption refrigeration unit to tilt similarly which in turn causes the non-return valves to open and close in alternating fashion. This tilting motion combined with the use of the non-return valves facilitates gravity flow of the solution from the receptacles to the container. This is illustrated in Figures 4a to 4c, which arrangement can be used in the first embodiment of the invention.

In the second embodiment as illustrated in Figures 5 to 7, the receptacles 206 are preferably tubes outside a housing of said absorption refrigeration unit extending downwards from the orifices of the floor 209. Said tubes lead to the container 207 which can be a closed vessel for housing the solution. As the intended use of the arrangement is in an absorption refrigeration system installed in a marine vessel, it is important to keep units of the system compact in size, especially the height is an important dimension because height of decks of the marine vessel is a limiting factor. By using the tubes extending directly from the bottom of the refrigeration unit, some freedom in placement of the container and/or other units of the system is achieved. For example the container 106 and one or more pumps of the absorption refrigeration system can be located on a lower deck and connecting the container with the tubes, i.e. receptacles 107.

In the second embodiment, the flow restriction device 210 can be a pump in the receptacle 207 pumping the solution, i.e. the process liquid, from the receptacle 207 to the container 206.. A pump in operation effectively prevents the solution from flowing against the pumping direction. A prolonged tilting to one side of the marine vessel housing the absorption refrigeration system may cause a situation where all the solution from one or more of the receptacles 207 is pumped in to the container 207. Therefore the flow-restriction devices 210, i.e. pumps, are either designed to endure dry running or they are equipped with a dry run protector which shuts down the pump when the receptacle is empty and switches the pump back on when solution is drained in to the receptacle.

The first aspect of the invention is thus an arrangement for an absorption refrigeration unit comprising a floor 109, 209 for collecting process liquid of the absorption refrigeration unit and a pump 304 for circulating said process liquid within the absorption refrigeration unit. At least two orifices are defined in the floor and a receptacle 107, 207 is provided below each of said at least two orifices for receiving said process liquid through said at least two orifices. The arrangement comprises a container 106, 206 configured to receive said process liquid from said receptacle through a flow restriction device 110, 210, which flow restriction device restricts flow of liquid from the container to the receptacle. Said pump 304 is configured to receive an input of process liquid from said container 106, 206.

In an embodiment of the first aspect of the invention, the floor 109, 209 is at least partially inclined towards said at least two orifices for channelling the process liquid through said orifices into the receptacles 107, 207 by gravity flow.

In an embodiment of the first aspect of the invention, said at least two orifices are provided with tubular extensions extending into said receptacles 107, 207.

In an embodiment of the first aspect of the invention, said flow restriction device is a non-return valve 110 allowing gravity flow of the process liquid from said receptacle 107 into said container 106.

In an embodiment of the first aspect of the invention, said non-return valve 110 is provided on a non-horizontal wall separating said receptacle 107 from said container 106.

In an embodiment of the first aspect of the invention, said receptacles 106 and said container 107 are provided within a housing of the absorption refrigeration unit by dividing a space below said floor 109 with non-horizontal walls into said receptacles 107 and said container 106.

In an embodiment of the first aspect of the invention, said flow restriction device is a pump 210 for pumping the process liquid from said receptacle 207 into said container 206.

In an embodiment of the first aspect of the invention, said receptacles 207 are tubes outside a housing of said absorption refrigeration unit.

The second aspect of the invention is an absorption refrigeration system, which comprises an absorption refrigeration unit and an arrangement according to the first aspect of the invention.

It will be obvious to a person skilled in the art that, as the technology advances, that the inventive concept can be implemented in various ways. The present invention and its embodiments are not limited to the examples described above but may vary within the scope of the claims.

## Claims

1. An arrangement for an absorption refrigeration unit comprising a floor (109, 209) for collecting process liquid of the absorption refrigeration unit and a pump (304) for circulating said process liquid within the absorption refrigeration unit, **characterized in that** at least two orifices are defined in the floor and a receptacle (107, 207) is provided below each of said at least two orifices for receiving said process liquid through said at least two orifices, wherein the arrangement comprises a container (106, 206) configured to receive said process liquid from said receptacle through a flow restriction device (110, 210) restricting flow of the process liquid from the container to the receptacle, wherein said pump (304) is configured to receive an input of process liquid from said container (106, 206).

2. The arrangement of claim 1, **characterized in that** the floor (109, 209) is at least partially inclined towards said at least two orifices for channelling the process liquid through said orifices into the receptacles (107, 207) by gravity flow.

3. The arrangement of claim 1 or 2, **characterized in that** said at least two orifices are provided with tubular extensions extending into said receptacles (107, 207).

4. The arrangement of any one of claims 1 to 3, **characterized in that** said flow restriction device is a non-return valve (110) allowing gravity flow of the process liquid from said receptacle (107) into said container (106).

5. The arrangement of claim 4, **characterized in that** said non-return valve (110) is provided on a non-horizontal wall separating said receptacle (107) from said container (106).

6. The arrangement of any one of claims 1 to 5, **characterized in that** said receptacles (106) and said container (107) are provided within a housing of the absorption refrigeration unit by dividing a space below said floor (109) with non-horizontal walls into said receptacles (107) and said container (106).

7. The arrangement of any one of claims 1 to 3, **characterized in that** said flow restriction device is a pump (210) for pumping the process liquid from said receptacle (207) into said container (206).

8. The arrangement of claim 7, **characterized in that** said receptacles (207) are tubes outside a housing of said absorption refrigeration unit.

9. An absorption refrigeration system, **characterized in that** the system comprises an absorption refrigeration unit and an arrangement according to any one of claims 1 to 8.
